# EUROPÄISCHE PATENTSCHRIFT

(11) **EP 2 590 840 B1**
(45) Veröffentlichungstag und Bekanntmachung des Hinweises auf die Patenterteilung: **10.09.2014**
(21) Anmeldenummer: 11726338.4
(22) Anmeldetag: 08.06.2011
(51) Int. Cl.: B60S 1/04, F16B 5/06, F16B 37/08

(54) **BEFESTIGUNGSANORDNUNG ZUM BEFESTIGEN VON KRAFTFAHRZEUGBAUTEILEN**
FASTENING DEVICE FOR FASTENING VEHICLE PARTS
DISPOSITIF DE FIXATION DES ELÉMENTS DE STRUCTURE DE VÉHICULE AUTOMBILE

(30) Priorität: 06.07.2010 DE 102010030964
(43) Veröffentlichungstag der Anmeldung: 15.05.2013
(73) Patentinhaber: Bayerische Motoren Werke Aktiengesellschaft, 80809 München (DE)
(72) Erfinder: VAN NIEKERK, Johann, 80993 München (DE); ERNST, Mario, 84144 Geisenhausen (DE)
(86) Internationale Anmeldenummer: PCT/EP2011/002793
(87) Internationale Veröffentlichungsnummer: WO 2012/003913

(56) Entgegenhaltungen:
- EP-A1- 1 719 925
- US-A- 4 176 428
- US-A1- 2005 121 560
- US-A1- 2007 087 612

## Beschreibung

Die Erfindung betrifft eine Befestigungsanordnung zum Befestigen eines ersten Kraftfahrzeugbauteils an einem zweiten Kraftfahrzeugbauteil gemäß der im Oberbegriff des Anspruchs 1 angegebenen Art. Die Erfindung betrifft ferner ein Verfahren zum Befestigen eines ersten Kraftfahrzeugbauteils an einem zweiten Kraftfahrzeugbauteil unter Verwendung einer solchen Befestigungsanordnung.

Die Befestigung eines Kraftfahrzeugbauteils an einem anderen Kraftfahrzeugbauteil ist ein immer wiederkehrendes Grundproblem in der Kraftfahrzeugtechnik. Herkömmlich werden Kraftfahrzeugbauteile z. B. mittels Schraubverbindungen lösbar an Karosseriebauteilen befestigt. Das Verschrauben ist jedoch ein verhältnismäßig aufwändiger Arbeitsschritt. Aus dem Stand der Technik sind daher auch verschraubungsfreie Befestigungsanordnungen bekannt.

Aus der EP 1 555 176 A1 ist eine verschraubungsfreie Befestigungsanordnung bekannt, die zwei formschlüssig miteinander verbindbare Befestigungselemente aufweist, wobei eines dieser Befestigungselemente ein Kugelbolzen ist und das andere Befestigungselement eine Hülse bzw. Muffe ist, die den kugelartig ausgebildeten Bolzen übergreifen kann, wodurch die Befestigung dieser beiden Befestigungselemente aneinander herbeigeführt wird. Das andere Befestigungselement weist ferner Sicherungsmittel auf, welche im befestigten Zustand die Hülse auf dem kugelartig ausgebildeten Bolzen festsetzt bzw. festlegt. Aufgrund der Kugelgeometrie des kugelartig ausgebildeten Bolzens wird sowohl beim formschlüssigen Befestigen als auch beim Lösen der Befestigungselemente ein Verkanten verhindert, was ein bedeutender Vorteil einer derartigen Befestigungsanordnung ist.

Aus der US 2007/0087612 A1 ist eine Befestigungsanordnung bekannt, die ein erstes Befestigungselement mit einer Hülse und ein zweites Befestigungselement mit einem rotationssymmetrisch ausgebildeten Bolzenkopf aufweist, wobei diese Befestigungselemente formschlüssig miteinander verbindbar sind, wozu die Hülse des ersten Befestigungselements den Bolzenkopf des zweiten Befestigungselements übergreifen kann. Ferner ist vorgesehen, dass das erste Befestigungselement eine axial verschiebbare und federnd vorgespannte Muffe aufweist, die als Sicherungsmittel zur Festlegung der formschlüssig miteinander verbundenen Befestigungselemente dient.

Eine Aufgabe der Erfindung ist es, eine Befestigungsanordnung der betreffenden Art bereitzustellen, die sowohl einfach handhabbar als auch kostengünstig herstellbar ist.

Diese Aufgabe wird gelöst durch eine erfindungsgemäße Befestigungsanordnung mit den Merkmalen des Anspruchs 1. Die vom Anspruch 1 abhängigen Ansprüche betreffen bevorzugte Weiterbildungen und Ausgestaltungen. Die Lösung der Aufgabe erstreckt sich gemäß dem nebengeordneten Anspruch auch auf ein Verfahren zum Befestigen eines ersten Kraftfahrzeugbauteils an einem zweiten Kraftfahrzeugbauteil unter Verwendung einer erfindungsgemäßen Befestigungsanordnung.

Die erfindungsgemäße Befestigungsanordnung zum Befestigen eines ersten Kraftfahrzeugbauteils an einem zweiten Kraftfahrzeugbauteil umfasst wenigstens ein erstes und wenigstens ein zweites Befestigungselement, die formschlüssig miteinander verbindbar sind, wobei das zweite Befestigungselement einen kugelartig ausgebildeten Bolzen aufweist und das erste Befestigungselement eine Hülse aufweist, die zur Herstellung eines Formschlusses den kugelartig ausgebildeten Bolzen übergreifen kann. Ferner ist vorgesehen, dass das erste Befestigungselement ein Sicherungsmittel zur Festsetzung bzw. Festlegung der formschlüssig miteinander verbundenen Befestigungselemente aufweist, wobei dieses Sicherungsmittel als Kappe ausgebildet ist, die axialbeweglich an der Außenmantelfläche der Hülse gehaltert ist. Erfindungsgemäß ist vorgesehen, dass an der Außenmantelfläche der Hülsenwandung der Hülse und auf der korrespondierenden Innenmantelfläche der Kappe ineinandergreifende Nut-Wulst-Elemente angeordnet sind, die eine definierte erste axiale Stellung und eine definierte zweite axiale Stellung der Kappe relativ zur Hülse vorgeben, wobei über eine axiale Relativbewegung der Kappe durch axiales Verschieben von einer definierten ersten axialen Stellung in eine definierte zweite axiale Stellung die Festsetzung bzw. Festlegung der Hülse auf dem kugelartig ausgebildeten Bolzen herbeiführbar ist.

Die erfindungsgemäße Befestigungsanordnung dient dem dauerhaften Befestigen eines ersten Kraftfahrzeugbauteils an einem zweiten Kraftfahrzeugbauteil. Ein erstes Kraftfahrzeugbauteil ist bevorzugt ein Einbauteil, wie z. B. eine Dämmplatte, ein Steuergerät, ein Verkleidungsteil, eine Kabelstrangführung etc. Ein erstes Kraftfahrzeugbauteil kann aber auch ein Anbauteil sein, wie z. B. eine Zierleiste, eine Kühlerabdeckung, ein Kennzeichenträger etc. Ein zweites Kraftfahrzeugbauteil ist bevorzugt ein karosseriefestes Bauteil und insbesondere ein in die Fahrzeugkarosserie eingebundenes Karosseriebauteil an dem das erste Kraftfahrzeugbauteil befestigt wird. Die erfindungsgemäße Befestigungsanordnung kann auch zum temporären Befestigen von Kraftfahrzeugbauteilen verwendet werden, bspw. zur Ausrichtung und Vorfixierung von Karosseriebauteilen im Karosseriebau.

Die erfindungsgemäße Befestigungsanordnung umfasst ein zweites Befestigungselement. Das zweite Befestigungselement weist einen kugelartig ausgebildeten Bolzen auf. Hierunter wird ein Bauteil verstanden, das einen kugelförmigen oder zumindest kugelsegmentförmigen Abschnitt aufweist. Der kugelartig ausgebildete Bolzen kann z. B. aus einem Stift oder einem Dom mit einer daran angeordneten Kugel bestehen, wie aus der EP 1 555 176 A1 bekannt. Bevorzugt ist jedoch vorgesehen, dass es sich bei dem kugelartig ausgebildeten Bolzen um einen Kugelbolzen handelt. Der kugelartig ausgebildete Bolzen ist bevorzugt am zweiten Kraftfahrzeugbauteil, wobei es sich hierbei insbesondere um ein Karosseriebauteil handelt, angeschweißt (was z. B. presswerksseitig erfolgen kann) und ragt von diesem ab. Bevorzugt ist der kugelartig ausgebildete Bolzen aus einem Aluminiummaterial, einem Stahlmaterial und insbesondere aus einem Edelstahlmaterial gebildet. Gegebenenfalls ist der kugelartig ausgebildete Bolzen mit einer Beschichtung und insbesondere Lackierung versehen.

Die erfindungsgemäße Befestigungsanordnung umfasst ferner ein erstes Befestigungselement. Das erste Befestigungselement weist eine Hülse auf. Unter einer Hülse wird ein sich axial erstreckendes rohrartiges oder rohränliches Bauteil verstanden, dass zumindest an einem axialen Ende eine Öffnung (oder dergleichen) aufweist, in welcher der kugelartig ausgebildete Bolzen des zweiten Befestigungselements zumindest abschnittsweise aufgenommen werden kann, wobei dieses axiale Ende der Hülse den betreffenden Abschnitt des kugelartig ausgebildeten Bolzens übergreift, was zur Herstellung eines Formschlusses führt. Der konstruktiv vorgegebene Überdeckungsbereich zwischen diesem axialen Ende der Hülse und dem kugelartig ausgebildeten Bolzen des zweiten Befestigungselements kann als Befestigungsabschnitt bezeichnet werden. Die Innenkontur des Befestigungsabschnitts kann mit einer zum kugelartig ausgebildeten Bolzen korrespondierenden Formgebung ausgebildet sein, wodurch der sich einstellende Formschluss verbessert wird. Bevorzugt ist vorgesehen, dass die Öffnung in der Hülse einen kreisrunden Querschnitt aufweist. Alternativ kann die Öffnung in der Hülse jedoch auch als Langloch ausgebildet sein, wodurch ein Montagetoleranzausgleich ermöglicht wird.

Der kugelartig ausgebildete Bolzen des zweiten Befestigungselements und die Hülse des ersten Befestigungselements sind konstruktiv aufeinander abgestimmt. Die erzielbaren Befestigungskräfte können z. B. durch die Größe des kugelartigen Abschnitts, die axiale Länge des Überdeckungsbereichs und/oder das Hülsenmaterial konstruktiv eingestellt werden. Mittels der erfindungsgemäßen Befestigungsanordnung werden vorrangig statische Befestigungskräfte erzeugt. Dennoch ist es möglich, mit der erfindungsgemäßen Befestigungsanordnung auch wechselnd und insbesondere auch dynamisch beanspruchte Kraftfahrzeugteile, wie z. B. eine Dachrehling, ein Stoßfänger etc., zu befestigen.

Erfindungsgemäß weist das erste Befestigungselement ein als Kappe ausgebildetes Sicherungsmittel auf. Aufgrund der Funktion kann dieses Sicherungsmittel auch als Betätigungsmittel bezeichnet werden. Unter einer Kappe wird ein hutartiges oder muffenartiges Bauteil verstanden, das axialbeweglich an der Außenmantelfläche der Hülse gehaltert ist. Durch eine axiale Bewegung der Kappe relativ zur Hülse aus einer definierten ersten axialen Stellung in eine definierte zweite axiale Stellung kann eine Festsetzung bzw. Festlegung der formschlüssig miteinander verbundenen Befestigungselemente erfolgen. Unter einer Festsetzung bzw. Festlegung wird die Fixierung und/oder Arretierung der Hülse auf dem kugelartig ausgebildeten Bolzen verstanden, wodurch eine unbeabsichtigte Trennung verhindert wird. Insofern kann die Festlegung auch als Feststellung bezeichnet werden. Die Festlegung dient ferner auch dazu, die zu erzielenden Befestigungskräfte aufzubringen. Bevorzugt ist vorgesehen, dass durch das Rückbewegen der Kappe aus der definierten zweiten axialen Stellung in die definierte erste axiale Stellung die Festlegung wieder reversibel aufgehoben werden kann. Die mittels der erfindungsgemäßen Befestigungsanordnung herbeigeführte Befestigung eines ersten Kraftfahrzeugbauteils an einem zweiten Kraftfahrzeugbauteil ist somit in vorteilhafter Weise zerstörungsfrei wieder aufhebbar.

Ein wesentlicher Vorteil der erfindungsgemäßen Befestigungsanordnung ist ferner darin zu sehen, dass durch die Vermeidung von Stanzlöchern in der Fahrzeugkarosserie, wie diese für die gängigen Schraub- oder Steckverbindungen meist erforderlich sind, korrosionskritische Stellen (insbesondere im Übergang Trocken / Nassbereich) entfallen. Somit können auch die aus dem Stand der Technik bekannten Abdichtungsmaßnahmen entfallen. Weitere Vorteile der erfindungsgemäßen Befestigungsanordnung sind: eine Senkung von Fertigungskosten und Materialkosten, sowie eine Reduzierung der Anlagentechnik, der Gerätetechnik und des Instandhaltungsaufwands. Ein Vorteil der erfindungsgemäßen Befestigungsanordnung ist auch darin zu sehen, dass diese zur Nachrüstung geeignet ist.

Nach einer bevorzugten Weiterbildung ist vorgesehen, dass die Hülse des ersten Befestigungselements an einem axialen Ende einen Befestigungsabschnitt aufweist, der im befestigten Zustand den kugelartig ausgebildeten Bolzen des zweiten Befestigungselements zumindest abschnittsweise übergreift, wobei die Hülsenwandung zumindest im Bereich dieses Befestigungsabschnitts mehrere sich axial längserstreckende Ausnehmungen aufweist. Diese insbesondere schlitzartig ausgebildeten Ausnehmungen ermöglichen, dass sich die Hülsenwandung in radialer Richtung elastisch aufweiten oder verengen kann, wodurch das axiale Ende der Hülse den betreffenden Abschnitt des kugelartig ausgebildeten Bolzens übergreifen kann. Bevorzugt sind drei und insbesondere vier Ausnehmungen vorgesehen, die bezüglich des Umfangs gleichmäßig verteilt angeordnet sind. Die Ausnehmungen können auch in Form von breiten Nuten ausgebildet sein, so dass die Hülsenwandung im Bereich des Befestigungsabschnitts aus einzelnen, durch die Nuten beabstandeten Zungen besteht, wobei die Zungen zwischen sich die Öffnung definieren, in welcher der kugelartig ausgebildete Bolzen des zweiten Befestigungselements zumindest abschnittsweise aufgenommen werden kann.

An der Außenmantelfläche (Außenumfangsfläche) der Hülsenwandung und auf der korrespondierenden Innenmantelfläche (Innenumfangsfläche) der Kappe des ersten Befestigungselements sind ineinandergreifende Nut-Wulst-Elemente angeordnet, die die definierte erste Stellung und die definierte zweite Stellung der Kappe relativ zur Hülse vorgeben. Bevorzugt sind mehrere Nut-Wulst-Elemente vorgesehen, die axial beabstandet sind. Dies wird nachfolgend im Zusammenhang mit den Figuren näher erläutert.

Bevorzugt ist vorgesehen, dass sich in der definierten ersten Stellung der Kappe relativ zur Hülse des ersten Befestigungselements nur einige der Nut-Wulst-Elemente im Eingriff befinden, wodurch die Kappe verliersicher an der Hülse gehaltert ist. Bevorzugt ist ferner vorgesehen, dass sich in der definierten zweiten Stellung alle Nut-Wulst-Elemente im Eingriff befinden, wodurch eine zuverlässige Festlegung der Hülse auf dem kugelartig ausgebildeten Bolzen bewerkstelligt wird. Dies wird nachfolgend im Zusammenhang mit den Figuren näher erläutert.

Nach einer bevorzugten Weiterbildung ist vorgesehen, dass an der Stirnseite des Befestigungsabschnitts der Hülse des ersten Befestigungselements wenigstens ein und insbesondere mehrere Abstandshalter angeordnet sind, die insbesondere in axialer Richtung überstehen. Hierüber kann im befestigten Zustand oder beim Befestigen z. B. eine definierte Anlage der Hülse am zweiten Kraftfahrzeugbauteil bewerkstelligt werden. Bevorzugt sind die Abstandshalter als axiale Vorsprünge ausgebildet.

Nach einer bevorzugten Weiterbildung ist vorgesehen, dass das zweite Kraftfahrzeugbauteil ein karosseriefestes Bauteil und insbesondere ein in die Fahrzeugkarosserie eingebundenes Karosseriebauteil ist und dass das erste Bauteil ein Anbauteil oder ein Einbauteil ist, wie bereits obenstehend erläutert.

Nach einer bevorzugten Weiterbildung ist vorgesehen, dass die zum ersten Befestigungselement gehörende Hülse in dem zu befestigenden ersten Kraftfahrzeugbauteil integriert ist. Hierdurch wird das Ausrichten des zu befestigenden ersten Kraftfahrzeugbauteils vereinfacht sowie der Befestigungsvorgang als solcher erleichtert. Dies wird nachfolgend im Zusammenhang mit den Figuren näher erläutert.

Nach einer bevorzugten Weiterbildung ist vorgesehen, dass das erste Befestigungselement aus einem Kunststoffmaterial oder einem Verbundmaterial gebildet ist. Dies gilt sowohl für die Hülse als auch für die Kappe. Bevorzugt ist vorgesehen, dass die Hülse und/oder die Kappe eine Verstärkung und/oder Armierung aus einem Metallmaterial aufweist. Insbesondere ist vorgesehen, dass es sich um spritzgusstechnisch hergestellte Teile handelt.

Das erfindungsgemäße Verfahren dient zum Befestigen eines ersten Kraftfahrzeugbauteils an einem zweiten Kraftfahrzeugbauteil unter Verwendung einer erfindungsgemäßen Befestigungsanordnung. Es umfasst die folgenden Schritte:
- Bereitstellen eines zweiten Kraftfahrzeugbauteils mit einem daran angeordneten zweiten Befestigungselement;
- Ausrichten des zu befestigenden ersten Kraftfahrzeugbauteils am zweiten Kraftfahrzeugbauteil;
- Befestigen des ersten Kraftfahrzeugbauteils am zweiten Kraftfahrzeugbauteil durch Anbringen (Aufsetzen) des ersten Befestigungselements, wobei das axiale Ende der Hülse des ersten Befestigungselements den betreffenden Abschnitt des kugelartig ausgebildeten Bolzens des zweiten Befestigungselements formschlüssig übergreift; und
- abschließendes Bewegen der Kappe am ersten Befestigungselement durch axiales Verschieben von der definierten ersten axialen Stellung in die definierte zweite axiale Stellung, wodurch die Festlegung erfolgt. Bevorzugt wird das zu befestigende erste Kraftfahrzeugbauteil hierbei sowohl ausgerichtet als auch fixiert.

Für das erfindungsgemäße Verfahren und dessen Weiterbildungen gelten analog die die erfindungsgemäße Befestigungsanordnung betreffenden Erläuterungen.

Die Erfindung wird nachfolgend anhand der Figuren beispielhaft näher erläutert. Im Rahmen der Erfindung lassen sich die Merkmale der gezeigten und/oder erläuterten Ausführungsbeispiele auch miteinander kombinieren, sofern hieraus kein technischer Widerspruch entsteht. Es zeigen:
- Fig. 1: ein erstes Ausführungsbeispiel einer erfindungsgemäßen Befestigungsanordnung in einer perspektivischen Explosionsansicht;
- Fig. 2: die zu der Befestigungsanordnung der Fig. 1 gehörende Hülse in einer perspektivischen Einzelansicht;
- Fig. 3: die zu der Befestigungsanordnung der Fig. 1 gehörende Kappe in einer perspektivischen Einzelansicht;
- Fig. 4: ein alternatives Ausführungsbeispiel einer Kappe in einer perspektivischen Ansicht;
- Fig. 5: ein zweites Ausführungsbeispiel mit einem im zu befestigenden Kraftfahrzeugbauteil integrierten Befestigungselement in einer perspektivischen Explosionsansicht; und
- Fig. 6: eine Sternscheibe zur Verwendung in einer erfindungsgemäßen Befestigungsanordnung in einer perspektivischen Ansicht.

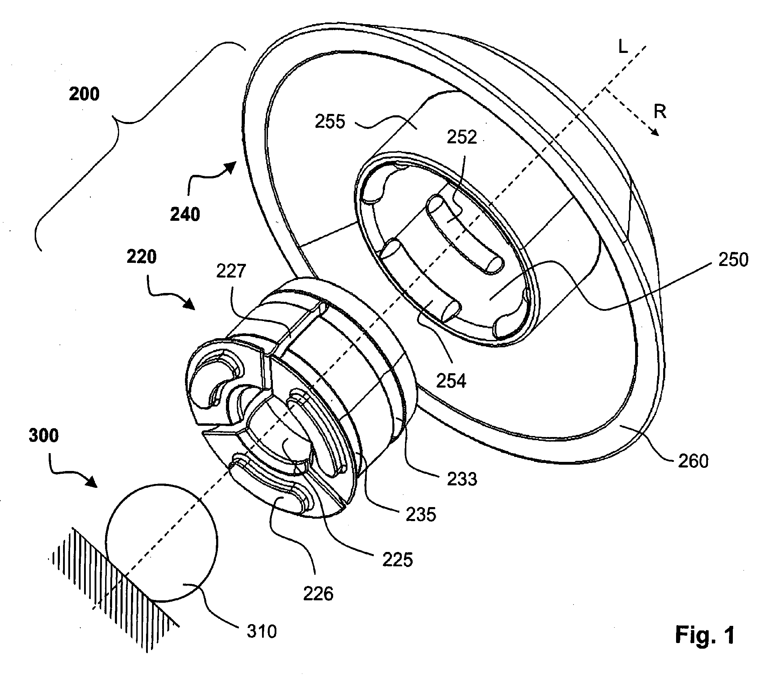

Die nachfolgend verwendeten Positionsangaben "unten" und "oben" beziehen sich auf die Darstellung der Fig. 1. Die axiale Richtung ist in der Fig. 1 mit dem Bezugszeichen L angegeben. Die radiale Richtung R ist als Senkrechte zu dieser axialen Richtung L definiert.

Fig. 1 zeigt ein erstes Ausführungsbeispiel einer erfindungsgemäßen Befestigungsanordnung zum Befestigen eines ersten Kraftfahrzeugbauteils an einem zweiten Kraftfahrzeugbauteil. Die gezeigte Befestigungsanordnung umfasst ein zweites, nur schematisch dargestelltes Befestigungselement 300 mit einem Kugelbolzen 310, der an dem zweiten, ebenfalls nur schematisch dargestellten Kraftfahrzeugbauteil fest angeschweißt ist. Die gezeigte Befestigungsanordnung umfasst ferner ein erstes Befestigungselement 200, dass aus einer zylindrischen Hülse 220 und aus einer hutartig geformten Kappe 240 besteht, die zum Zwecke der Veranschaulichung voneinander getrennt dargestellt sind. Die Hülse 220 ist einstückig ausgebildet. Die Kappe 240 ist bevorzugt ebenfalls einstückig ausgebildet, wobei auch eine mehrstückige Ausbildung der Kappe 240 möglich ist.

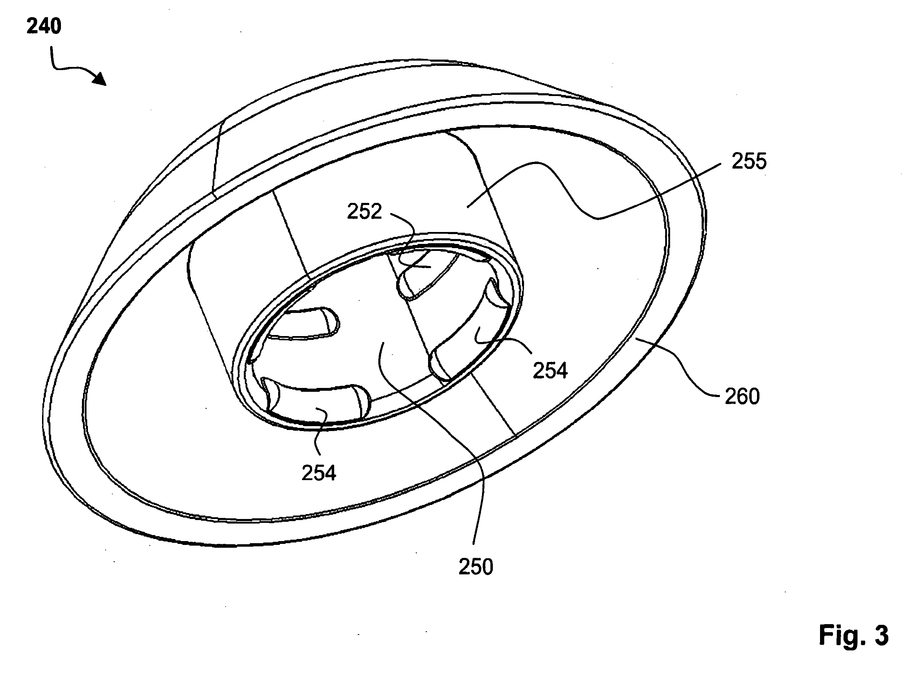

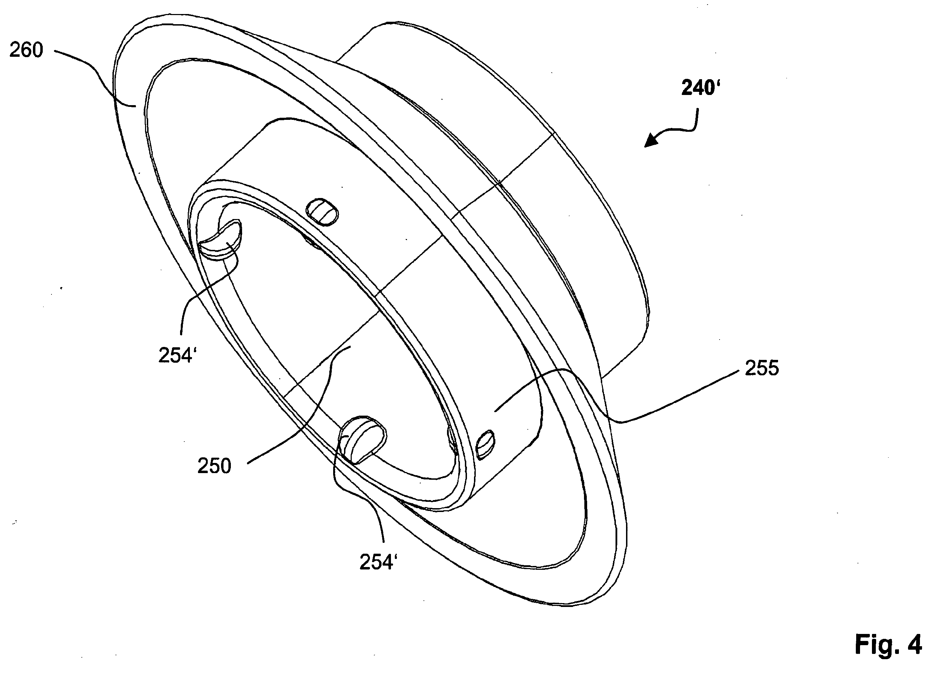

Die Kappe 240 weist eine schürzenartige Krempe 260 auf, die ein zylindrisches Mittelstück 255 umschließt, in dem eine zentrale Bohrung (Aufnahme) 250 angeordnet ist. Im Gebrauchszustand ist die Kappe 240 axialbeweglich (Achse L) an der Außenmantelfläche der Hülse 220 gehaltert, wobei die Hülse 220 passgenau und zumindest abschnittsweise in der zentralen Bohrung 250 der Kappe 240 aufgenommen ist. Fig. 3 zeigt vergrößert dieselbe Kappe 240 in einer anderen perspektivischen Ansicht. Anstelle der gezeigten hutartigen Ausgestaltung der Kappe 240 sind auch andere Ausgestaltungen möglich, wie z. B. in der Fig. 4 gezeigt (Kappe 240').

An der Innenmantelfläche der zentralen Bohrung 250 der Kappe 240 sind auf zwei axial beabstandeten Umfangslinien radial nach innen vorstehende Wulstringsegmente 252 und 254 ausgebildet. Pro Umfangslinie sind beispielhaft jeweils vier Wulstringsegmente vorgesehen. Anstelle der gezeigten Wulstringsegmente 252 und 254 können auch durchgehende Wulstringe vorgesehen sein. Korrespondierend zu diesen Wulstringsegmenten 252 und 254 sind an der Außenmantelfläche der Hülsenwandung der Hülse 220 zwei axial beabstandete und jeweils vollständig umlaufende Nuten 233 und 235 ausgebildet, wobei der axiale Abstand der Nuten 233 und 235 dem axialen Abstand der Wulstringssegmente 252 und 254 an der Kappe 240 entspricht.

Durch formschlüssiges Eingreifen der Wulstringsegmente 252 und 254 in die Nuten 233 und 235 werden eine erste und eine zweite Stellung der Kappe 240 relativ zu der Hülse 220 definiert. Ferner ist hierdurch die Kappe 240 verliersicher auf der Hülse 220 gehaltert. Im Grundzustand (Anlieferungszustand) des ersten Befestigungselements 200 befindet sich die Kappe 240 bezüglich der Hülse 220 in einer definierten ersten Stellung, in der die unteren Wulstringsegmente 254 der Kappe 240 in die obere Nut 233 der Hülse 220 eingreifen.

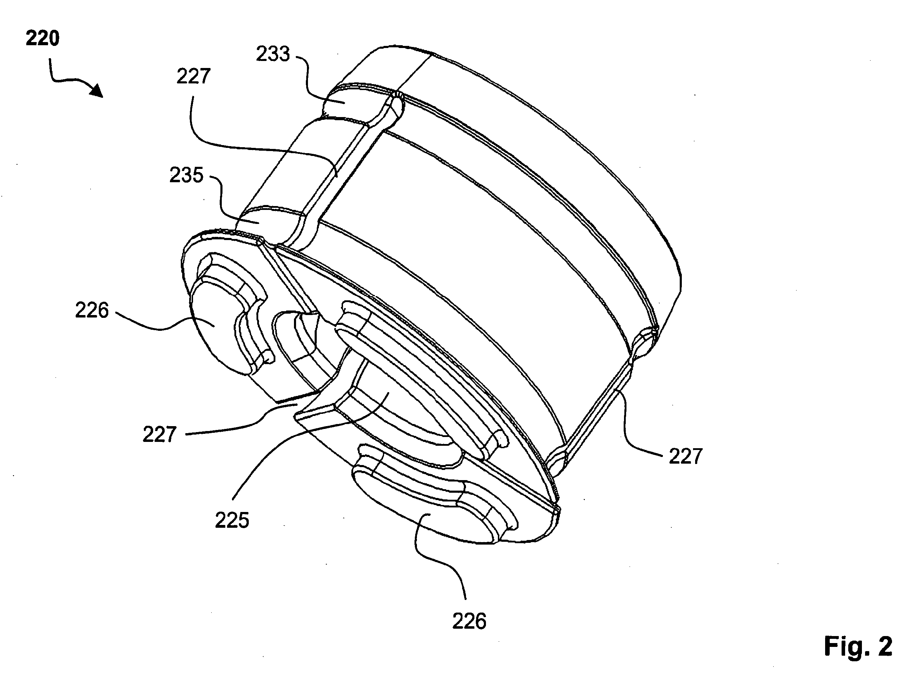

Die Hülse 220 weist an ihrem unteren axialen Ende eine Öffnung 225 auf, in welcher der Kugelbolzen 310 des zweiten Befestigungselements 300 aufgenommen werden kann, wobei die Hülse 220 den Kugelbolzen 310 übergreift und ein Formschluss herbeigeführt wird. Der konstruktiv vorgegebene axiale Überdeckungsbereich zwischen der Hülse 220 und dem Kugelbolzen 310 kann als Befestigungsabschnitt bezeichnet werden. An dem der Öffnung 225 gegenüberliegenden axialen Ende ist die Hülse 220 mit einer geschlossenen Stirnseite ausgebildet. An der unteren kreisringförmigen Stirnseite der Hülse 220 sind mehrere als Vorsprünge ausgebildete Abstandshalter 226 ausgebildet, die eine definierte und insbesondere verkippungsfreie Anlage der Hülse 220 am zweiten Kraftfahrzeugbauteil ermöglichen. Im Befestigungsabschnitt der Hülse 220 ist die Hülsenwandung mit drei schlitzartigen Ausnehmungen 227 ausgebildet, die bezüglich des Umfangs in gleichen Abständen angeordnet sind und die die Hülsenwandung in mehrere Schenkel unterteilen. Diese Ausnehmungen 227 erstrecken sich ausgehend von der unteren kreisringförmigen Stirnseite in axialer Richtung über beide Nuten 235 und 233. Diese Ausnehmungen 227 ermöglichen ein elastisches Aufweiten und Verengen der Hülsenwandung in radialer Richtung R. Die Anzahl von drei Ausnehmungen 227 in der Hülse 220 ist lediglich beispielhaft. Ebenso können z. B. auch vier oder fünf solcher Ausnehmungen 227 vorgesehen sein. Pro Schenkel ist ein stirnseitiger Abstandshalter 226 vorgesehen. Fig. 2 zeigt vergrößert dieselbe Hülse 220 in einer anderen perspektivischen Ansicht.

Zum Befestigen eines ersten Kraftfahrzeugbauteils an einem zweiten Kraftfahrzeugbauteil wird zunächst das zu befestigende erste Kraftfahrzeugbauteil am zweiten Kraftfahrzeugbauteil ausgerichtet. Hiernach wird das erste Befestigungselement 200 in axialer Richtung auf das zweite Befestigungselement 300 aufgesetzt, was manuell oder maschinell erfolgen kann, wobei der Kugelbolzen 310 des zweiten Befestigungselements 300 formschlüssig in der Öffnung 225 der zum ersten Befestigungselement gehörenden Hülse 220 aufgenommen wird (erste Stufe).

Anschließend wird die Kappe 240 des ersten Befestigungselements 200 manuell oder maschinell durch axiales Verschieben von der definierten ersten Stellung, in welcher die unteren Wulstringsegmente 254 der Kappe 240 in die obere Nut 233 der Hülse 220 eingreifen, in eine definierte zweite Stellung überführt, in welcher die unteren Wulstringsegmente 254 in die untere Nut 235 und die oberen Wulstringsegmente 252 in die obere Nut 233 eingreifen. Hierbei ist zunächst ein durch den Eingriff der Nut-Wulst-Elemente bedingter Bewegungswiderstand zu überwinden. Das Eingreifen bzw. Einrasten der Nut-Wulst-Elemente erfolgt wahrnehmbar (z. B. Klickgeräusch), wenn die Kappe 240 die definierte zweite Stellung erreicht. Auf eine Drehwinkelposition zwischen der Kappe 240 und der Hülse 220 kommt es im Allgemeinen nicht an.

Wenn sich die Kappe 240 in der definierten zweiten Stellung befindet, bewirkt diese, dass die Hülsenwandung der Hülse 220 in radialer Richtung elastisch verengt und die Schenkel der Hülsenwandung in radialer Richtung gegen den Kugelbolzen 310 des zweiten Befestigungselements 300 gedrückt werden, wodurch eine räumliche Festsetzung bzw. Festlegung (Fixierung) der Befestigungselemente 200 und 300 zueinander erfolgt (zweite Stufe). Indem in der definierten zweiten Stellung der Kappe 240 alle Nut-Wulst-Elemente miteinander im Eingriff sind, wird eine zuverlässige Festlegung der Hülse 220 auf dem Kugelbolzen 310 erzielt.

Wenn sich die Kappe 240 in der definierten zweiten Stellung befindet, wird das zu befestigende erste Kraftfahrzeugbauteil an einem dafür vorgesehenen Befestigungsabschnitt unter der Krempe 260 der Kappe 240 eingeklemmt und gegen das zweite Kraftfahrzeugbauteil angedrückt, wodurch die Befestigung herbeigeführt wird. Da in der zweiten Stellung der Kappe 240 alle Nut-Wulst-Elemente im Eingriff sind, was aufgrund der beiden axial beabstandeten Nuten 233 und 235 auch als doppelter Eingriff bezeichnet werden kann, wird die Kappe 240 besonders fest und zuverlässig in ihrer definierten zweiten Stellung gehalten. Optional ist auch eine Verklebung der Kraftfahrzeugbauteile und/oder der Komponenten der Befestigungsanordnung möglich.

Anstelle der beiden Nuten 233 und 235 können auch drei und mehr Nuten an der Hülse 220, sowie hierzu korrespondierende Wulstringe oder Wulstringsegmente an der Kappe 240, vorgesehen sein, wodurch dann z. B. auch mehr als nur zwei definierte Stellungen für die Kappe 240 auf der Hülse 220 ermöglich sind. Ferner können die Wulstringsegmente 254 auch als Noppen 254' ausgebildet sein, wie in der Fig. 4 gezeigt. Ferner können die Nuten und Wulstringe (bzw. Wulstringsegmente) auch vertauscht angeordnet sein.

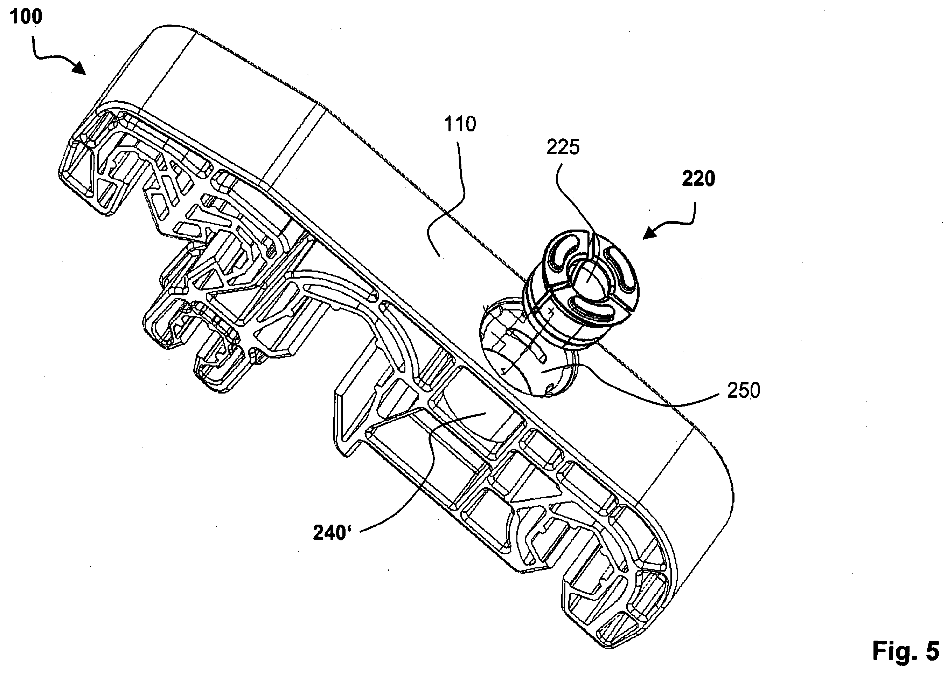

Fig. 5 zeigt ein Ausführungsbeispiel, bei dem das erste Befestigungselement in dem zu befestigenden ersten Kraftfahrzeugbauteil 100 integriert ist. Bei dem zu befestigenden ersten Kraftfahrzeugbauteil 100 handelt es sich beispielhaft um eine Kabelführung. Die im Zusammenhang mit den vorausgehenden Figuren erläuterte Kappe 240 ist hier als Muffe 240" ausgebildet und in das zu befestigende Kraftfahrzeugbauteil 100 integriert. Zum Zwecke der Veranschaulichung ist die Hülse 220 separiert dargestellt. Die Kappe bzw. Muffe 240" kann einstückig mit dem Kraftfahrzeugbauteil 100 ausgebildet sein. Alternativ ist es möglich, die Kappe bzw. Muffe 240" separat herzustellen und in das Kraftfahrzeugbauteil 100 einzusetzen oder dieses im Herstellungsprozess in geeigneter Weise zu umspritzen. Das Kraftfahrzeugbauteil 100 ist insbesondere als Kunststoffspritzgussteil ausgebildet.

Ein Vorteil dieses Ausführungsbeispiels ist, dass das Ausrichten des zu befestigenden Kraftfahrzeugbauteils 100 vereinfacht und der Befestigungsvorgang als solcher erleichtert wird. Das Kraftfahrzeugbauteil 100 muss nur zusammen mit der Hülse 220 auf den Kugelbolzen 310 des zweiten Befestigungselements 300 aufgesetzt und anschließend in axialer Richtung festgedrückt werden, bis der flächige Abschnitt 110 des Kraftfahrzeugbauteils 100 am zweiten Kraftfahrzeugbauteil anstößt. Hierbei taucht die Hülse 220 von einer definierten ersten Stellung bis zu einer definierten zweiten Stellung in die Bohrung 250 der Muffe 240" ein.

Zur Befestigung des Kraftfahrzeugbauteils 100 können auch mehrere erfindungsgemäße Befestigungsanordnungen vorgesehen sein. Hierbei ist es insbesondere vorteilhaft, wenn die Öffnung 225 in zumindest einer der Hülsen bzw. Muffen 240" als Langloch ausgebildet ist, um einen Montagetoleranzausgleich zu ermöglichen.

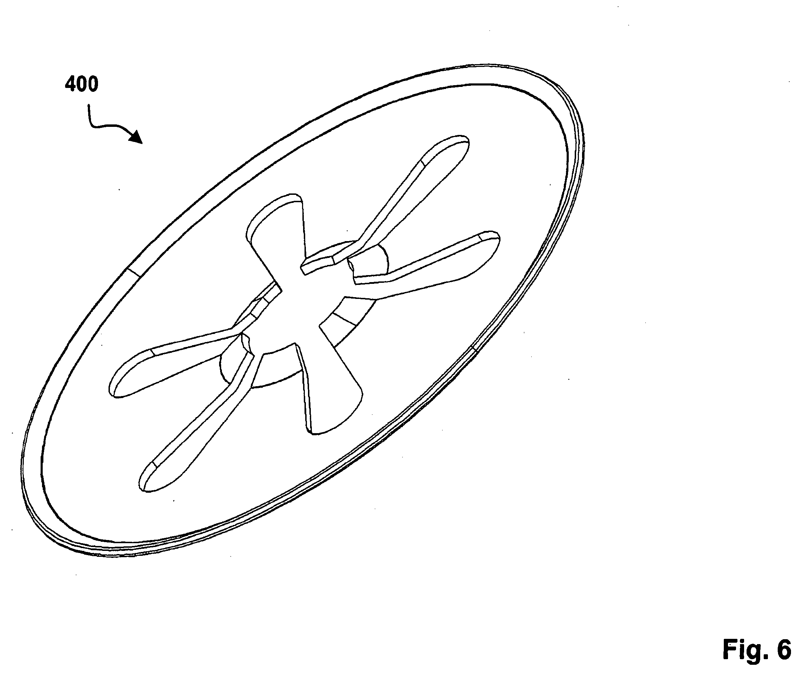

Fig. 6 zeigt eine Sternscheibe 400 zur Verwendung in einer erfindungsgemäßen Befestigungsanordnung. Es ist vorgesehen, dass die zentrale Sternlochung der Sternscheibe 400 den Kugelbolzen 310 des zweiten Befestigungselements 300 übergreifen kann. Die Sternscheibe 400 ist bevorzugt aus einem Metallmaterial und insbesondere aus einem Edelstahlmaterial oder Federstahlmaterial gebildet und kann z. B. in einer Hülse 220 als Verstärkung und/oder Armierung integriert sein, um z. B. die Befestigungskräfte zu erhöhen. Eine solche Zusatzmaßnahme ist z. B. in thermisch beanspruchten Bereichen sinnvoll, wie bspw. bei der Befestigung einer Auspuffabdeckung oder eines Wärmeleitblechs.

### Bezugszeichenliste

### Befestigungsanordnung zum Befestigen von Kraftfahrzeugbauteilen

- 100: zu befestigendes erstes Kraftfahrzeugbauteil
- 200: erstes Befestigungselement
- 220: Hülse
- 225: Öffnung
- 226: Abstandshalter
- 227: Ausnehmung, Schlitzung
- 233: Nut
- 235: Nut
- 240: Kappe (Muffe)
- 250: zentrale Öffnung / zentrale Bohrung
- 252: Wulst (Noppen)
- 254: Wulst (Noppen)
- 255: zylindrisches Mittelstück
- 260: Krempe
- 300: zweites Befestigungselement
- 310: Kugelbolzen
- 400: Sternscheibe

## Patentansprüche

1. Befestigungsanordnung zum Befestigen eines ersten Kraftfahrzeugbauteils an einem zweiten Kraftfahrzeugbauteil, umfassend wenigstens ein erstes (200) und wenigstens ein zweites (300) Befestigungselement, die formschlüssig miteinander verbindbar sind,
wobei das zweite Befestigungselement (300) einen kugelartig ausgebildeten Bolzen (310) aufweist und das erste Befestigungselement (200) eine Hülse (220) aufweist, die zur Herstellung eines Formschlusses den kugelartig ausgebildeten Bolzen (310) übergreifen kann, und
wobei das erste Befestigungselement (200) ferner ein Sicherungsmittel zur Festlegung der formschlüssig miteinander verbundenen Befestigungselemente (200, 300) aufweist, das als Kappe (240) ausgebildet und axialbeweglich an der Außenmantelfläche der Hülse (220) gehaltert ist,
**dadurch gekennzeichnet, dass**
an der Außenmantelfläche der Hülsenwandung der Hülse (220) und auf der korrespondierenden Innenmantelfläche der Kappe (240) ineinandergreifende Nut-Wulst-Elemente (233, 235; 252, 254) angeordnet sind, die eine definierte erste axiale Stellung und eine definierte zweite axiale Stellung der Kappe (240) relativ zur Hülse (220) vorgeben,
wobei über eine axiale Relativbewegung der Kappe (240) durch axiales Verschieben von der definierten ersten axialen Stellung in die definierte zweite axiale Stellung die Festlegung der Hülse (220) auf dem kugelartig ausgebildeten Bolzen (310) herbeiführbar ist.

2. Befestigungsanordnung nach Anspruch 1,
**dadurch gekennzeichnet, dass**
die Hülse (220) an einem axialen Ende einen Befestigungsabschnitt aufweist, der im befestigten Zustand den kugelartig ausgebildeten Bolzen (310) zumindest abschnittsweise übergreift, wobei die Hülsenwandung im Bereich des Befestigungsabschnitt mehrere sich axial längserstreckende Ausnehmungen (227) aufweist.

3. Befestigungsanordnung nach Anspruch 1 oder 2,
**dadurch gekennzeichnet, dass**
in der definierten ersten Stellung nur einige der Nut-Wulst-Elemente (233, 254) im Eingriff sind, wodurch die Kappe (240) verliersicher an der Hülse (220) gehaltert ist.

4. Befestigungsanordnung nach Anspruch 1 oder 2,
**dadurch gekennzeichnet, dass**
in der definierten zweiten Stellung alle Nut-Wulst-Elemente (235, 254; 233, 252) im Eingriff sind, wodurch eine zuverlässige Festlegung der Hülse (240) auf dem kugelartig ausgebildeten Bolzen (310) bewerkstelligt ist.

5. Befestigungsanordnung nach einem der Ansprüche 2 bis 4,
**dadurch gekennzeichnet, dass**
an der Stirnseite des Befestigungsabschnitts der Hülse (220) mehrere Abstandshalter (226) angeordnet sind.

6. Befestigungsanordnung nach einem der vorausgehenden Ansprüche, **dadurch gekennzeichnet, dass**
das zweite Kraftfahrzeugbauteil ein karosseriefestes Bauteil und insbesondere ein in die Fahrzeugkarosserie eingebundenes Karosseriebauteil ist und dass das zu befestigende erste Kraftfahrzeugbauteil ein Anbauteil oder ein Einbauteil ist.

7. Befestigungsanordnung nach einem der vorausgehenden Ansprüche, **dadurch gekennzeichnet, dass**
das erste Befestigungselement (200) in dem zu befestigenden ersten Kraftfahrzeugbauteil (100) integriert ist.

8. Befestigungsanordnung nach einem der vorausgehenden Ansprüche, **dadurch gekennzeichnet, dass**
das erste Befestigungselement (200) aus einem Kunststoffmaterial oder einem Verbundmaterial gebildet ist.

9. Verfahren zum Befestigen eines ersten Kraftfahrzeugbauteils an einem zweiten Kraftfahrzeugbauteil unter Verwendung einer Befestigungsanordnung gemäß einem der vorausgehenden Ansprüche, umfassend die folgenden Schritte:
- Bereitstellen eines zweiten Kraftfahrzeugbauteils mit einem daran angeordneten zweiten Befestigungselement (300);
- Ausrichten des zu befestigenden ersten Kraftfahrzeugbauteils am zweiten Kraftfahrzeugbauteil;
- Befestigen des ersten Kraftfahrzeugbauteils am zweiten Kraftfahrzeugbauteil durch Anbringen des ersten Befestigungselements (200), wobei das axiale Ende der Hülse (220) des ersten Befestigungselements (200) den betreffenden Abschnitt des kugelartig ausgebildeten Bolzens (310) des zweiten Befestigungselements (300) formschlüssig übergreift; und
- abschließendes Bewegen der Kappe (240) am ersten Befestigungselement durch axiales Verschieben von der definierten ersten axialen Stellung in die definierte zweite axiale Stellung.

## Claims

1. A fastening arrangement for fastening a first motor-vehicle component to a second motor-vehicle component, comprising a first (200) and at least one second (300) fastening element positively connectable together, wherein the second fastening element (300) has a spherical pin (310) and the first fastening element (200) has a sleeve (220) which can overlap the spherical pin (310) in order to make a positive connection, and
wherein the first fastening element (200) has a means for securing the positively connected fastening elements (200, 300) and in the form of a cap (240) and mounted so as to be axially movable on the outer surface of the sleeve (220),
**characterised in that**
interlocking groove and bead elements (233, 235; 252, 254) are formed on the outer surface of the wall of the sleeve (220) and on the corresponding inner surface of the cap (240) and set a defined first axial position and a defined second axial position of the cap (240) relative to the sleeve (220),
wherein the sleeve (220) is fastened on the spherical pin (310) by axial relative movement of the cap (240) by axial displacement from the defined first axial position into the defined second axial position.

2. A fastening arrangement according to claim 1,
**characterised in that**
at an axial end the sleeve (220) has a fastening portion which at least partly overlaps the spherical pin (310) when fastened,
wherein the sleeve wall has a number of axially and longitudinally extending recesses (227) in the neighbourhood of the fastening portion.

3. A fastening arrangement according to claim 1 or claim 2,
**characterised in that**
in the defined first position only some of the groove and bead elements (233, 254) are in engagement, thus non-releasably attaching the cap (240) to the sleeve (220).

4. A fastening arrangement according to claim 1 or claim 2, **characterised in that**
in the defined second position all the groove and bead elements (235, 254; 233, 252) are in engagement, thus reliably securing the sleeve (240) on the spherical pin (310).

5. A fastening arrangement according to any of claims 2 to 4, **characterised in that**
a number of spacers (226) are disposed on the end face of the fastening portion of the sleeve (220).

6. A fastening arrangement according to any of the preceding claims, **characterised in that**
the second vehicle component is a component fixed to the vehicle, especially a component incorporated in the vehicle body, and the first vehicle component for fastening is an attached or an incorporated component.

7. A fastening arrangement according to any of the preceding claims, **characterised in that**
the first fastening element (200) is incorporated in the first vehicle component (100) for fastening.

8. A fastening arrangement according to any of the preceding claims, **characterised in that**
the first fastening element (200) is made of a plastics or a composite material.

9. A method of fastening a first vehicle component to a second vehicle component using a fastening device according to any of the preceding claims, comprising the following steps:
- providing a second vehicle component with a second fastening element (300) mounted thereon;
- aligning the first vehicle component for fastening with the second vehicle component;
- fastening the first vehicle component to the second vehicle component by attaching the first fastening element (200), wherein the axial end of the sleeve (220) of the first fastening element (200) positively overlaps the relevant portion of the spherical pin (310) of the second fastening component (300); and
- finally moving the cap (240) on the first fastening element by axial displacement from the defined first axial position into the defined second axial position.

## Revendications

1. Dispositif de fixation d'un premier composant de structure de véhicule sur un second composant de structure de véhicule comprenant au moins un premier élément de fixation (200) et au moins un second élément de fixation (300) qui peuvent être reliés l'un à l'autre par une liaison par la forme, dans lequel
le second élément de fixation (300) comporte un goujon (310) réalisé sous la forme d'une sphère et le premier élément de fixation (200) comporte une douille (220) susceptible de venir en prise sur le goujon (310) réalisé sous la forme d'une sphère pour obtenir la liaison par la forme, et
le premier élément de fixation (200) comporte en outre un moyen de protection pour permettre de fixer les éléments de fixation (200, 300) reliés l'un à l'autre par une liaison par la forme, qui est réalisée sous la forme d'un capuchon (240) et est maintenue en étant mobile axialement sur l'enveloppe externe de la douille (220),
**caractérisé en ce que**
sur l'enveloppe externe de la paroi de la douille (220) et sur l'enveloppe interne correspondante du capuchon (240) sont positionnés des éléments à rainure et bossage (233, 235, 252, 254) qui déterminent une première position axiale définie et une seconde position axiale définie du capuchon (240) par rapport à la douille (220),
la fixation de la douille (220) sur le goujon (310) réalisé en forme de sphère pouvant être provoqué par un déplacement relatif du capuchon (240) par coulissement axial de la première position axiale définie à la seconde position axiale définie.

2. Dispositif de fixation conforme à la revendication 1,
**caractérisé en ce que**
la douille (220) comporte à une extrémité axiale une partie de fixation qui vient en prise dans l'état de fixation au moins par section sur le goujon (310) réalisé en forme de sphère, la paroi de la douille comportant dans la zone de la partie de fixation plusieurs évidements (227) s'étendant longitudinalement en direction axiale.

3. Dispositif de fixation conforme à la revendication 1 ou 2,
**caractérisé en ce que**
dans la première position définie seuls certains des éléments à nervure et bossage (233, 254) sont en prise, le capuchon (240) étant ainsi maintenu sur la douille (220) sans risque de perte.

4. Dispositif de fixation conforme à la revendication 1 ou 2,
**caractérisé en ce que**
dans la seconde position définie tous les éléments à nervure et bossage (235, 254, 233, 252) sont en prise, de façon à obtenir une fixation fiable de la douille (240) sur le goujon (310) réalisé en forme de sphère.

5. Dispositif de fixation conforme à une des revendications 2 à 4, **caractérisé en ce que**
sur la face frontale de la partie de fixation de la douille (220) sont positionnés plusieurs éléments d'écartement (226).

6. Dispositif de fixation conforme à l'une des revendications précédentes,
**caractérisé en ce que**
le second composant de structure de véhicule est un composant fixé à la carrosserie et en particulier un composant de structure de carrosserie intégré à la carrosserie du véhicule et le premier composant de structure de véhicule à fixer est une pièce rapportée ou une pièce incorporée.

7. Dispositif de fixation conforme à l'une des revendications précédentes,
**caractérisé en ce que**
le premier élément de fixation (200) est intégré dans le premier composant de structure de véhicule (100) devant être fixé.

8. Dispositif de fixation conforme à l'une des revendications précédentes,
**caractérisé en ce que**
le premier élément de fixation (200) est réalisé en un matériau synthétique ou en un matériau composite.

9. Procédé de fixation d'un premier composant de structure de véhicule à un second composant de structure de véhicule en utilisant un dispositif de fixation conforme à l'une des revendications précédentes comprenant les étapes consistant à :
- se procurer un second élément de structure de véhicule avec un second élément de fixation (300) monté sur celui-ci,
- centrer le premier composant de structure de véhicule devant être fixé sur le second élément de structure de véhicule,
- fixer le premier composant de structure de véhicule sur le second composant de structure de véhicule en installant le premier élément de fixation (200), l'extrémité axiale de la douille (220) du premier élément de fixation (200) venant en prise par une liaison par la forme sur la partie correspondante du goujon réalisé en forme de sphère (310) du second élément de fixation (300), et
- déplacement final du capuchon (240) sur le premier élément de fixation par coulissement axial de la première position axiale définie à la seconde position axiale définie.
